# EUROPEAN PATENT APPLICATION

(11) **EP 2 290 853 A2**
(43) Date of publication of application: **02.03.2011**
(21) Application number: 10174639.4
(22) Date of filing: 31.08.2010
(51) Int. Cl.: H04B 10/18

(54) **Optical transmission system, optical transmission equipment, and chromatic dispersion compensation method**

(30) Priority: 31.08.2009 JP 2009199972
(71) Applicant: FUJITSU LIMITED, Kawasaki-shi, Kanagawa 211-8588 (JP)
(72) Inventor: Ooi, Hiroki, Kanagawa 211-8588 (JP)
(74) Representative: HOFFMANN EITLE

(57) **Abstract**

An optical transmission system includes an optical transmission equipment (100) and an optical receiving device (300; 400). The optical transmission equipment transmits an optical signal from a first adjacent node to a second adjacent node, and includes an optical multiplexing and demultiplexing unit that demultiplexes the optical signal from the first adjacent node into an optical transmission signal to be transmitted to the second adjacent node and an optical demultiplexed signal, and a compensating unit (140) that partially compensates chromatic dispersion in the optical demultiplexed signal. The optical receiving device receives the optical signal from the optical transmission equipment, and includes a converting unit (430) that converts the optical demultiplexed signal the chromatic dispersion of which is partially compensated by the compensating unit (140) into an electric digital signal, and a digital processing uni (440) that compensates chromatic dispersion remaining in the electric digital signal.

## Description

### FIELD

The embodiments discussed herein are directed to an optical transmission system, an optical transmission equipment, and a chromatic dispersion compensation method.

### BACKGROUND

Higher speeds have been demanded of optical transmission systems; and the transmission rate of, for example, 100 Gbit/s increased from 10 Gbit/s or 40 Gbit/s has been under consideration. With the increased transmission rate, signal transmission conditions need to be met at higher level, and a higher level of transmission characteristics is required. More specifically, the optical signal-to-noise ratio (OSNR) required for 100 Gbit/s is approximately 10 times higher than that for 10 Gbit/s and 40 Gbit/s, while the signal degradation amount is estimated to be 100 to 1000 times larger due to the chromatic dispersion and the fiber nonlinear effect.

Moreover, the 10 Gbit/s and 40 Gbit/s optical transmission systems are provided with a dispersion compensation module (DCM) at each node of the transmission path (see, for example, Japanese Laid-open Patent Publication No. 2006-245706), and therefore the transmission distance is limited because of the optical insertion loss of the DCMs. This means that the optical insertion loss due to the DCMs becomes more significant for a 100 Gbit/s optical transmission system in which a high level of transmission characteristics is required.

Under such circumstances, a digital coherent reception system is an effective technology for realizing substantially the same transmission distance and wavelength intervals at the transmission rate of 100 Gbit/s as at the rates of 10 Gbit/s and 40 Gbit/s. In the digital coherent reception system, a signal phase-modulated on the transmission side is subjected to chromatic dispersion compensation by high-speed digital signal processing and thereby demodulated on the reception side. With such a digital coherent reception system, resistance to optical dispersion can be significantly improved in comparison with a 10 Gbit/s or 40 Gbit/s signal that has been subjected to optical intensity modulation by a non-return-to-zero (NRZ) modulation or a return-to-zero differential phase-shift keying (RZ-DPSK) modulation and is demodulated by a direct detection reception system. For this reason, a technology of removing DCMs from the nodes of the transmission path and performing chromatic dispersion compensation by use of a high-speed digital signal processor (DSP) on the reception side (see, for example, Oda S. et al. "112 Gb/s DP-QPSK Transmission Using a Novel Nonlinear Compensator in Digital Coherent Receiver", Optical Fiber Communication-includes post deadline papers, 2009. OFC 2009. Conference on, March 2009).

However, when the DSP conducts chromatic dispersion compensation in accordance with the digital coherent reception system, the power consumption of the DCF increases as the amount of chromatic dispersion compensation increases. In other words, when DCMs are removed from the nodes on the transmission path and the chromatic dispersion compensation is performed by the DSP on the reception side, the circuit size of the DSP is increased, which leads to excessive power consumption.

Accordingly, it is an object in one aspect of an embodiment of the invention to provide an optical transmission system, an optical transmission equipment, and a chromatic dispersion compensation method that can reduce the power consumption and realize high-speed optical transmission.

### SUMMARY

According to an aspect of an embodiment of the invention, an optical transmission system includes an optical transmission equipment that transmits an optical signal from a first adjacent node to a second adjacent node, the optical transmission equipment including an optical multiplexing and demultiplexing unit that demultiplexes the optical signal from the first adjacent node into an optical transmission signal that is to be transmitted to the second adjacent nods and en optical demultiplexed signal addressed to an optical receiving device, and that multiplexes the optical transmission signal with a signal from the optical receiving unit (300; 400) before transmission to the second adjacent node, and a compensating unit that partially compensates chromatic dispersion that occurs in the optical demultiplexed signal obtained by the optical multiplexing and demultiplexing unit, and the optical receiving device that receives the optical signal from the optical transmission equipment, the optical receiving device including a converting unit that converts the optical demultiplexed signal the chromatic dispersion of which is partially compensated by the compensating unit into an electric digital signal, and a digital processing unit that compensates, by digital signal processing, chromatic dispersion remaining in the electric digital signal that is obtained from conversion performed by the converting unit.

According to another aspect of an embodiment of the invention, an optical transmission system includes an optical transmission equipment that transmits an optical signal from a first adjacent node to a second adjacent node, the optical transmission equipment including a compensating unit that partially compensated, in advance, chromatic dispersion that occurs in the optical signal when an optical signal sent out by an optical sending device is carried to an optical receiving device, and an optical multiplexing and demultiplexing unit that demultiplexes an optical signal from the first adjacent node into an optical transmission signal that is to be transmitted to the second adjacent node and an optical demultiplexed signal addressed to an optical receiving device, and that multiplexes the optical transmission signal with the optical signal the chromatic dispersion of which is compensated by the compensating unit and sends it to the second adjacent node, the optical sending device that sends the optical signal to the optical transmission equipment, and the optical receiving device that receives the optical signal transmitted, by the optical transmission equipment, the optical receiving device including a converting unit that converts the optical signal, which is sent by the optical sending device and transmitted by the optical transmission equipment and the second adjacent node, to an electric digital signal, and a digital processing unit that compensates, by digital signal processing, chromatic dispersion remaining in the electric digital signal converted by the converting unit.

According to still another aspect of an embodiment of the invention, an optical transmission system includes an optical transmission equipment that transmits an optical signal from a first adjacent node to a second adjacent node, the optical transmission equipment including a compensating unit that partially compensates chromatic dispersion that occurs in the optical signal from the first adjacent node, and an optical multiplexing and demultiplexing unit that demultiplexes the optical signal the chromatic dispersion of which is partially compensated by the compensating unit into an optical transmission signal that is to be transmitted to the second adjacent node and an optical demultiplexed signal addressed to an optical receiving device, and that the optical transmission signal with an optical signal from an optical transmitting device, and the optical receiving device that receives the optical signal from the optical transmission equipment, the optical receiving device including a converting unit that converts the optical demultiplexed signal obtained by the optical multiplexing and demultiplexing unit into an electric digital signal, and a digital processing unit that compensates, by digital signal processing, chromatic dispersion remaining in the electric digital signal that is obtained from conversion performed by the converting unit.

According to still another aspect of an embodiment of the invention, an optical transmission equipment, includes a routing unit through which an optical signal is transmitted, an optical multiplexing and demultiplexing unit through which an optical demultiplexed signal obtained from demultiplexing of the optical signal that is transmitted through the routing unit or an optical multiplexed signal that is multiplexed with the optical signal passes, and a compensating unit that performs chromatic dispersion compensation onto the optical demultiplexed signal or the optical multiplexed signal that passes through the optical multiplexing and demultiplexing unit.

According to still another aspect of an embodiment of the invention, a chromatic dispersion compensation method, includes receiving an optical signal, demultiplexing the optical signal received in the receiving into an optical transmission signal that is to be transmitted to an adjacent node and an optical demultiplexed signal addressed to an optical receiving device, partially compensating chromatic dispersion that occurs in the optical demultiplexed signal obtained, in the demultiplexing, converting the optical demultiplexed signal the chromatic dispersion of which has been partially compensated in the compensating into an electric digital signal, and compensating chromatic dispersion remaining in the electric digital signal obtained from conversion in the converting, by digital signal processing.

According to still another aspect of an embodiment of the invention, a chromatic dispersion compensation method, includes receiving an optical signal from an adjacent node, partially compensating, in advance, chromatic dispersion that occurs in the optical signal when the optical signal sent out by an optical sending device is carried to a destination, multiplexing the optical signal received in the receiving with the optical signal the chromatic dispersion of which has been compensated in the compensating, demultiplexing the optical signal multiplexed in the multiplexing into an optical transmission signal that is to be transmitted to another adjacent node and an optical demultiplexed signal that is addressed to an optical receiving device, converting the optical demultiplexed signal obtained in the demultiplexing into an electric digital signal, and compensating chromatic dispersion remaining in the electric digital signal obtained from conversion in the converting, by digital signal processing.

### BRIEF DESCRIPTION OF DRAWINGS

FIG. 1 is a diagram for illustrating the structure of an optical transmission system according to a first embodiment;
FIG. 2 is a flowchart of a chromatic dispersion compensating operation according to the first embodiment;
FIG. 3 is a diagram for illustrating the structure of an optical transmission system according to a second embodiment;
FIG. 4 is a block diagram for illustrating the structure of a ROADM node according to the second embodiment;
FIG. 5 is a block diagram for illustrating the structure of an optical transmitter/receiver according to the second embodiment;
FIG. 6 is a flowchart of a chromatic dispersion compensating operation according to the second embodiment;
FIG. 7 is a block diagram for illustrating the structure of a ROADM node according to a third embodiment;
FIG. 8 is a flowchart of a chromatic dispersion compensating operation according to the third embodiment;
FIG. 9 is a block diagram for illustrating the structure of a ROADM node according to a fourth embodiment;
FIG. 10 is a diagram of an example of the longest path according to the fourth embodiment;
FIG. 11 is a diagram for explaining the amount of dispersion compensation by the DCM according to the fourth embodiment;
FIG. 12 is a diagram for illustrating examples of changes in accumulated chromatic dispersion;
FIG. 13 is a diagram for explaining the amount of signal degradation in the ROADM nodes;
FIG. 14 is a diagram for illustrating examples of the effects of the concentrated arrangement of DCMs;
FIG. 15 is a block diagram for illustrating a modification example of a ROADM node;
FIG. 16 is a block diagram for illustrating another modification example of a ROADM node;
FIG. 17 is a block diagram for illustrating an exemplary structure of an ILA node;
FIG. 18 is a block diagram for illustrating another modification example of a ROADM node; and
FIG. 19 is a diagram for illustrating examples of gain changes.

### DESCRIPTION OF EMBODIMENT(S)

Preferred embodiments of the present invention will be explained with reference to accompanying drawings. The present invention should not be limited to these embodiments, however.

### [a] First Embodiment

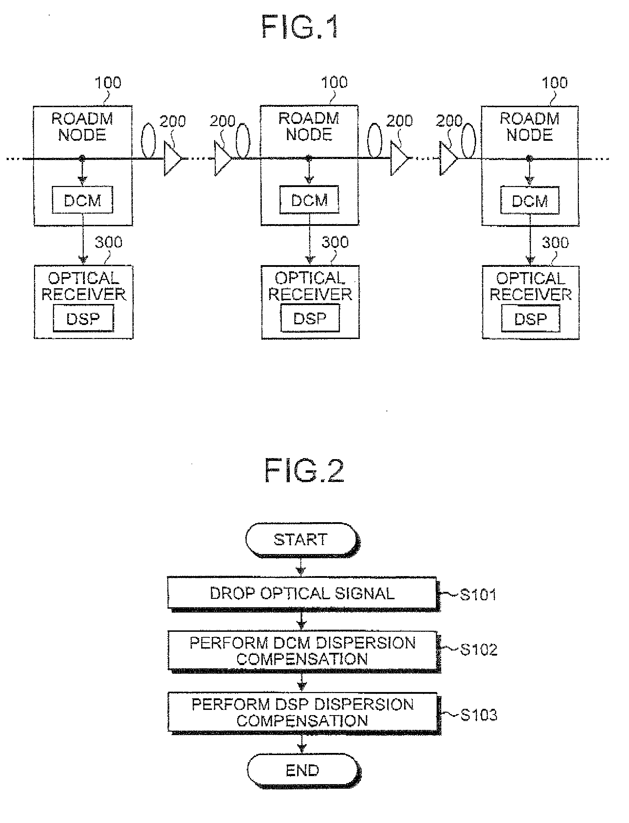

FIG. 1 is a diagram for illustrating the structure of an optical transmission system according to the first embodiment. The optical transmission system illustrated in FIG. 1 includes reconfigurable optical add/drop multiplexer (ROADM) nodes 100, in-line amplifier (ILA) nodes 200, and optical receivers 300.

A ROADM node 100 amplifies and transmits an optical signal to its adjacent node (another ROADM node 100 or an ILA node 200), and also demultiplexes (drops) a signal addressed to the optical receiver 300 from the transmitted optical signal and outputs it to the optical receiver 300. At this point, the ROADM node 100 compensates the chromatic dispersion of the drop signal by use of a DCM, and outputs it to the optical receiver 300. In other words, the ROADM node 100 does not perform the DCM chromatic dispersion compensation onto the optical signal that is to be transmitted to the adjacent node, but performs the DCM chromatic dispersion compensation onto a signal that is dropped at this node (hereinafter, "drop signal"). Thus, no optical insertion loss is produced due to the DCM in the optical signal transmitted by the ROADM node 100.

An ILA node 2CO amplifies and transmits the optical signal to its adjacent node (a ROADM node 100 or another ILA node 200). At this point, the ILA node 200 amplifies and transmits the optical signal without performing the DCM chromatic dispersion compensation. For this reason, there is no optical insertion loss at the DCM also in the optical signal transmitted by the ILA node 200.

An optical receiver 300 is connected to a ROADM node 100, and demodulates the signal that is dropped at the corresponding ROADM node 100 by the high-speed digital signal processing by use of a DSP. In other words, the optical receiver 300 converts the drop signal to an electric digital signal, and executes the chromatic dispersion compensation at the DSP onto the electric digital signal obtained from this conversion. At this point, because the drop signal input to the optical receiver 300 has already been subjected to the chromatic dispersion compensation by the DCM of the ROADM node 100, the amount of chromatic dispersion compensation is reduced at the DSP. As a result, the circuit size of the DSP can be prevented from increasing, and excessive power consumption can be avoided at the optical receiver 300.

Next, the chromatic dispersion compensating operation of the optical transmission system having the above structure is explained with reference to the flowchart of FIG. 2.

The optical signal amplified and transmitted by the ROADM node 100 and the ILA node 200 is dropped at the ROADM node 100 that is connected to the destination optical receiver 300 for the optical signal (step S101). When the optical signal is transmitted by the ROADM node 100 and the ILA node 200, the optical signal is not subjected to the DCM chromatic dispersion compensation, and therefore no optical insertion loss is produced in the optical signal at the DCM at this point.

Then, the drop signal is subjected to the chromatic dispersion compensation by the DCM (step S102). In other words, the drop signal that is not going to be transmitted to the adjacent node is subjected to the chromatic dispersion compensation by the DCM. The drop signal subjected to the chromatic dispersion compensation is output to the optical receiver 300.

Thereafter, the drop signal input to the optical receiver 300 is converted to an electric digital signal, and the resultant electric digital signal is subjected to the chromatic dispersion compensation by the DSP (step S103). In this manner, a sufficient amount of chromatic dispersion compensation can be attained by the DCM and the DSP, and a desirable OSNR can be achieved for an optical signal of a transmission rate as high as 100 Gbit/s, for example.

In a transmission distance range up to 1500 km, the chromatic dispersion in the transmission path is generally 0 ps/nm to 30000 ps/nm. Thus, if the amount of chromatic dispersion compensation performed by the DSP of the optical receiver 300 is in the range of, for example, -20000 ps/nm to +20000 ps/nm, the amount of chromatic dispersion compensation performed by the DCM of the ROADM node 100 should be determined approximately -10000 ps/nm. For such a DCM, a fiber-grating DCM, a higher-order mode DCM, or a dispersion compensating fiber (DCF) Raman may be adopted.

By dividing the chromatic dispersion compensating operation of the optical signal to the DCM and to the DSP, the chromatic dispersion compensation of -10000 ps/nm is provided by the DCM after the optical signal is dropped at the ROADM node 100, and the chromatic dispersion compensation of -20000 ps/nm is provided by the DSP at the optical receiver 300. In other words, the chromatic dispersion of 0 ps/nm to 30000 ps/nm that could be produced within the transmission distance range up to 1500 km can be compensated.

As described above, according to the present embodiment, the chromatic dispersion compensation is not performed on an optical signal that is being transmitted. The chromatic dispersion compensation is performed by a DCM on a drop signal that is dropped at a ROADM node, and the chromatic dispersion compensation is further performed by a DSP at an optical receiver. In this manner, the optical insertion loss at the DCM can be minimized, and the amount of chromatic dispersion compensation by the DSP can be reduced so that the circuit size of the DSP can be prevented from increasing. As a result, high-speed optical transmission can be realized, while suppressing the power consumption.

### [b] Second Embodiment

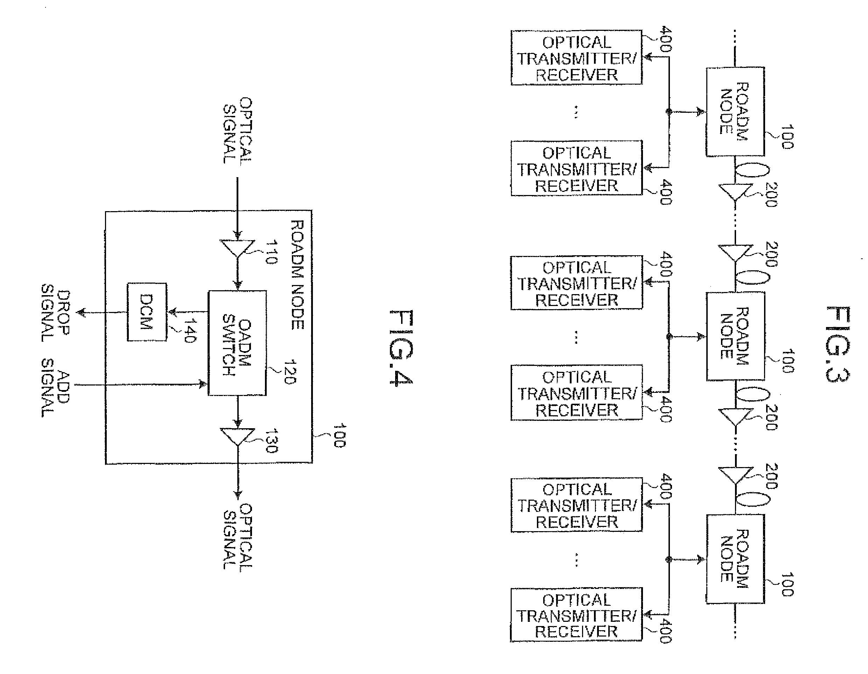

FIG. 3 is a diagram for illustrating the structure of an optical transmission system according to the second embodiment. The components of FIG. 3 that are the same as those of FIG. 1 are given the same numerals. The optical transmission system of FIG. 3 includes the ROADM nodes 100, the ILA nodes 200, and optical transmitters/receivers 400. The optical transmission system of FIG. 3 transmits optical signals at the transmission rate of 100 Gbit/s, for example.

The ROADM node 100 amplifies and transmits an optical signal to its adjacent node (another ROADM node 100 or an ILA node 200). The ROADM node 100 also drops a signal that is addressed to the optical transmitter/receiver 400 from the transmitted optical signal to output to the optical transmitter/receiver 400, and multiplexes/demultiplexes (adds) a signal input from the optical transmitter/receiver 400 into the transmitted optical signal. Here, in the same manner as in the first embodiment, the ROADM node 100 performs chromatic dispersion compensation onto the drop signal at the DCM, and outputs it to the optical transmitter/receiver 400.

The ILA node 200 amplifies and transmits the optical signal to its adjacent node (a ROADM node 100 or another ILA node 200). Here, in the same manner as in the first embodiment, the ILA node 200 amplifies and transmits the optical signal without performing the DCM chromatic dispersion compensation thereon.

The optical transmitter/receiver 400 is connected to the ROADM node 100, and demodulates the signal dropped at the corresponding ROADM node 100 by high-speed digital signal processing. Moreover, the optical transmitter/receiver 400 outputs, to the connected ROADM node 100, a signal addressed to an optical transmitter/receiver 400 that is connected to a different ROADM node 100.

FIG. 4 is a block diagram for illustrating the structure of a ROADM node 100 according to the second embodiment. The ROADM. node 100 includes an amplifier 110, an optical add/drop multiplexer (OADM) switch 120, an amplifier 130, and a DCM 140.

The amplifier 110 amplifies the optical signal that is transmitted from the adjacent ILA node 200 (or ROADM node 100) and input to the node of the amplifier 110. The OADM switch 120 performs demultiplexing and multiplexing of optical signals. More specifically, the OADM switch 120 drops a signal that is addressed to the optical transmitter/receiver 400 connected to the same node from the optical signal, and adds a signal (hereinafter, "add signal") that is input by the optical transmitter/receiver 400 connected to the same node to the transmitted optical signal. The amplifier 130 amplifies the optical signal output from the OADM switch 120.

The DCM 140 performs the chromatic dispersion compensation on the signal dropped by the OADM switch 120. More specifically, the DCM 140 includes, for example, a fiber grating DCM, a higher-order mode DCM, or a DCF Raman, and compensates the chromatic dispersion of a drop signal when the drop signal passes through it. For example, if the DCM 140 includes a fiber grating DCM, the fiber grating DCM realizes the chromatic dispersion compensation by changing the position of the light reflection in accordance with the wavelength by use of fibers in which a grating is inscribed. For this reason, in comparison with the chromatic dispersion compensation performed by an ordinary fiber DCM, the DCM 140 can increase the amount of chromatic dispersion compensation and reduce the optical insertion loss and non-linear effect. Furthermore, when the DCM 140 includes, for example, a higher-order mode DCM or a DCF Raman, the optical insertion loss can be reduced in the same manner. The DCM 140 outputs the drop signal that has been subjected to the chromatic dispersion compensation, to the optical transmitter/receiver 400.

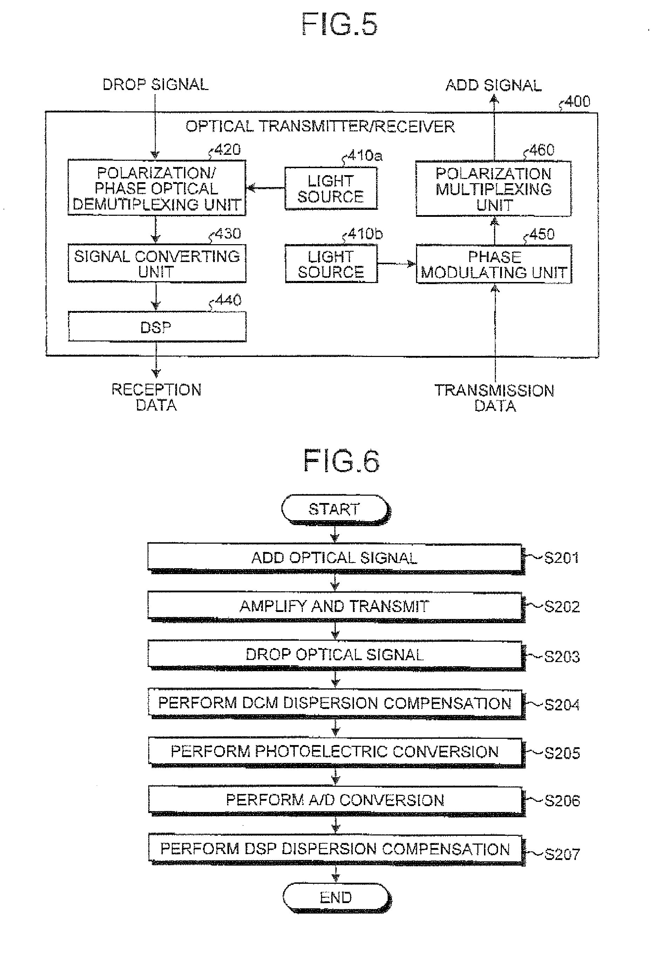

FIG. 5 is a block diagram for illustrating the structure of the optical transmitter/receiver 400 according to the second embodiment. The optical transmitter/receiver 400 illustrated in FIG. 5 includes light sources 410a and 410b, a polarization/phase optical demultiplexing unit 420, a signal converting unit 430, a DSP 440, a phase modulating unit 450, and a polarization multiplexing unit 460.

The light sources 410a and 410b are continuous wave (CW) light sources that produce continuous light. The light source 410a supplies the produced continuous light to the polarization/phase optical demultiplexing unit 420, and the light source 410b supplies the produced continuous light to the phase modulating unit 450. The polarization/phase optical demultiplexing unit 420 demultiplexes the drop signal output by the ROADM node 100 into signals in accordance with polarized waves and phases, by use of the continuous light supplied from the light source 410a. In other words, the signal dropped at the ROADM node 100 is phase-multiplexed and polarization-multiplexed, and therefore the polarization/phase optical demultiplexing unit 420 demultiplexes the drop signal into signals of different polarized waves and phases so that signals of different phases can be obtained.

The signal converting unit 430 photo-electrically converts the signals of the different phases output by the polarization/phase optical demultiplexing unit 420 to electric signals, and further conducts analog/digital (A/D) conversion to convert it to an electric digital signal. Then, the signal converting unit 430 outputs the obtained electric digital signal to the DSP 440.

The DSP 440 adopts the digital coherent reception system to perform the chromatic dispersion compensation and demodulation onto the electric digital signal output by the signal converting unit 430, by digital signal processing. Then, the DSP 440 outputs the demodulation result as reception data.

The phase modulating unit 450 performs phase modulation onto the continuous light supplied from the light source 410b in accordance with the transmission data, and further performs phase multiplexing. In other words, the phase modulating unit 450 multiplexes multiple (e.g., two) phasa-modulated signals each obtained from the phase modulation, and thereby generates a phase-multiplexed signal of a rate higher than (e.g., twice) the transmission data. Thus, if the modulation rate of the transmission data is, for example, 25 Gbaud, the phase modulating unit 450 multiplexes two phase-modulated signals and outputs a phase-multiplexed signal of 50 Gbit/s.

The polarization multiplexing unit 460 performs polarization multiplexing onto the phase-multiplexed signals output by the phase modulating unit 450. In other words, the polarization multiplexing unit 460 multiplexes the phase-multiplexed signals into the polarized waves that are orthogonal to each other, and thereby generates an add signal of a rate higher than that of the phase-multiplexed signals. For example, the polarization multiplexing unit 460 multiplexes two phase-multiplexed signals of 50 Gbit/s into a horizontally-polarized wave and a vertically-polarized wave, and outputs an add signal of 100 Gbit/s.

Next, the chromatic dispersion compensating operation performed in the optical transmission system that is configured as above is explained with reference to the flowchart of FIG. 6. In the following explanation, it is assumed that a signal is transmitted from the optical transmitter/receiver 400 connected to a ROADM node 100, to the optical transmitter/receiver 400 connected to another ROADM node 100.

The transmission data of the optical transmitter/receiver 400 becomes an add signal through the phase-modulation and phase-multiplexing performed by the phase modulating unit 450 and polarization-multiplexing performed by the polarization multiplexing unit 460. The resultant add signal is output to the ROADM node 100, and the add signal is added to the transmitted optical signal by the OADM switch 120 of the ROADM node 100 (step S201). Then, the optical signal is amplified and transmitted by the ROADM node 100 and the ILA node 200 (step S202), and carried to the ROADM node 100 to which the destination optical transmitter/receiver 400 is connected. In this process, the optical signal does not pass through any DCM, and therefore there is no optical insertion loss due to a DCM.

Then, when the optical signal reaches the ROADM node 100 to which the destination optical transmitter/receiver 400 is connected, a signal is dropped from the transmitted optical signal by the OADM switch 120 of this ROADM node 100 (step S203). The chromatic dispersion on the order of 0 ps/nm to 30000 ps/nm, for example, occurs in the drop signal in accordance with the transmission distance. Such a drop signal is subjected to the chromatic dispersion compensation when it passes through the DCM 140 (step S204). The amount of chromatic dispersion compensation at the DCM 140 is on the order of -10000 ps/nm, for example. This means that, after the drop signal passes through the DCM 140, the chromatic dispersion of approximately 20000 ps/nm remains at most.

The drop signal that passes through the DCM 140 is output to the optical transmitter/receiver 400, demultiplexes into signals of different phases by the polarization/phase optical demultiplexing unit 420 of the optical transmitter/receiver 400, and photo-electrically converted by the signal converting unit 430 into electric signals (step S205). Further, the obtained electric signal is subjected to A/D conversion by the signal converting unit 430 and converted into an electric digital signal (step S206). The obtained electric digital signal is input to the DSP 440, where it is subjected to the chromatic dispersion compensation by use of the digital coherent reception system (step S207). The amount of chromatic dispersion compensation performed by the DSP 440 can be adjusted in the range of, for example, -20000 to +20000 so that the chromatic dispersion remaining after the compensation of the DCM 140 can be compensated. In the above example, the chromatic dispersion remaining in the drop signal that has passed through the DCM 140 is 20000 ps/nm at most, and thus the DSP 440 should perform the chromatic dispersion compensation of approximately -20000 ps/nm to +10000 ps/nm.

As discussed above, according to the second embodiment, the chromatic dispersion compensation is not performed onto the optical signal that is transmitted by the ROADM node 100 and the ILA node 200, while the chromatic dispersion compensation is performed onto the signal that is dropped from the transmitted optical signal partially by the DCM 140 and partially by the DSP 440. For this reason, no optical insertion loss is produced in the transmitted optical signal at the DCM, and the amount of chromatic dispersion compensation by the DSP 440 can be reduced, which suppresses the power consumption of the DSP 440. As a result, a sufficient amount of chromatic dispersion compensation and a sufficient OSNR can be attained at a transmission rate as high as 100 Gbit/s, for example, and high-speed optical transmission can be realized while suppressing the power consumption.

### [c] Third Embodiment

The feature of the third embodiment resides in that the chromatic dispersion compensation is performed by the DCM on an add signal before it is multiplexed with the optical signal transmitted by the ROADM node. Thus, the structures of the optical transmission system and the optical transmitter/receiver 400 according to the third embodiment are the same as those of the second embodiment, and the explanation thereof is omitted. According to the third embodiment, the structure of the ROADM node 100 is different from that of the second embodiment.

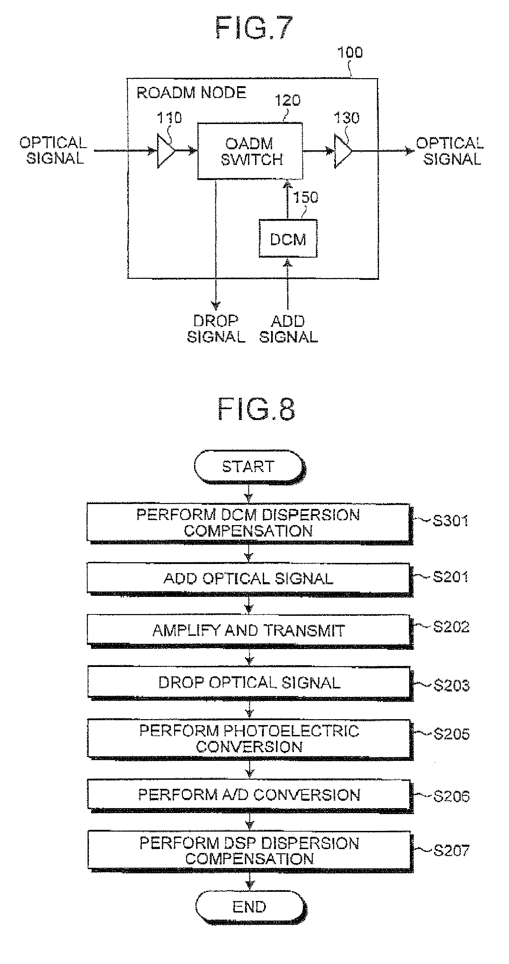

FIG. 7 is a block diagram for illustrating the structure of the ROADM node 100 according to the third embodiment. In FIG. 7, the components that are the same as those of FIG. 4 are given the same numerals, and the explanation thereof is omitted. The ROADM node 100 illustrated in FIG. 7 includes a DCM 150 in place of the DCM 140 illustrated in FIG. 4.

The DCM 150 performs the chromatic dispersion compensation before the add signal output by the optical transmitter/receiver 400 is added to the optical signal by the OADM switch 120. More specifically, the DCM 150 includes, for example, a fiber grating DCM, a higher-order mode DCM, or a DCF Raman in the same manner as the DCM 140, and compensates the chromatic dispersion of the add signal when the add signal passes through the DCM 150. Then, the DCM 150 outputs the add signal subjected to the chromatic dispersion compensation, to the OADM switch 120.

Because the add signal is a signal obtained immediately after being output by the optical transmitter/receiver 400 and before being transmitted a long distance, chromatic dispersion is generally not incurred. However, according to the present embodiment, the DCM 150 compensates, in advance, the chromatic dispersion that is likely to occur in the future transmission of the optical signal, when the add signal passes through the DCM 150. In this manner, without compensating the chromatic dispersion of the optical signal that is being transmitted by the DCM, a sufficient amount of chromatic dispersion compensation can be achieved by performing the chromatic dispersion compensation on the add signal at the DCM 150 before the add signal is added and also performing the chromatic dispersion compensation at the DSP 440 of the destination optical transmitter/receiver 400.

Next, the chromatic dispersion compensating operation of the optical transmission system that is configured as above is explained with reference to the flowchart of FIG. 8. The components of FIG. 8 that are the same as those of FIG. 6 are given the same numerals. The following explanation focuses on a signal that is transmitted from an optical transmitter/receiver 400 connected to one of the ROADM nodes 100 to an optical transmitter/receiver 400 connected to another RQADM node 100.

The transmission data of the optical transmitter/receiver 400 is phase-modulated and phase-multiplexed by the phase modulating unit 450, and polarization-multiplexed by the polarization multiplexing unit 460 into an add signal. The obtained add signal is output to the ROADM node 100, and subjected to the chromatic dispersion compensation when it passes through the DCM 150 of the ROADM node 100 (step S301). The amount ot chromatic dispersion compensation performed by the DCM 150 is, for example, approximately -10000 ps/nm. This means that negative chromatic dispersion of approximately - 10000 ps/nm has already been incurred in the add signal after passing through the DCM 150. On the other hand, positive chromatic dispersion usually appears in the transmission path. Thus, the negative chromatic dispersion in the add signal is canceled in the transmission process of the optical signal.

The add signal subjected to the chromatic dispersion compensation is added to the transmitted optical signal by the OADM switch 120 (step S201). Then, the optical signal is amplified and transmitted by the ROADM node 100 and the ILA node 200 (step S202), and carried to the ROADM node 100 to which the destination optical transmitter/receiver 400 is connected. The optical signal does not pass the DCM in this process, and therefore no optical insertion loss is produced at the DCM.

When the optical signal reaches the ROADM node 100 to which the destination optical transmitter/receiver 400 is connected, the OADM switch 120 of this ROADM node 100 drops a signal from the transmitted optical signal (step S203) In the transmission process up to this point, chromatic dispersion of approximately 0 ps/nm to 30000 ps/nm appears in the optical signal in accordance with the transmission distance. As discussed above, however, the chromatic dispersion of the add signal is compensated in advance, and thus the chromatic dispersion of 20000 ps/nm at most remains in the drop signal that is dropped.

The drop signal is output to the optical transmitter/receiver 400, demultiplexed into signals of different phases by the polarization/phase optical demultiplexing unit 420 of the optical transmitter/receiver 400, and photo-electrically converted to an electrical signal by the signal converting unit 430 (step S205). Furthermore, the obtained electric signal is subjected to the A/D conversion by the signal converting unit 430 and converted into an electric digital signal (step S206). The obtained electric digital signal is input to the DSP 440, where the chromatic dispersion compensation is performed by use of the digital coherent reception system (step S207). The amount of chromatic dispersion compensation performed by the DSP 440 can be adjuster in the range of, for examples, -20000 ps/nm to +20000 ps/nm, and the chromatic dispersion that is not compensated in advance by the DCM 150 is compensated here. In the above example, the chromatic dispersion remaining in the drop signal is approximately 20000 ps/nm at most, and thus the DSP 440 should perform the chromatic dispersion compensation of approximately - 20000 ps/nm to +10000 ps/nm.

As discussed above, according to the present embodiment, chromatic dispersion compensation is not performed on the optical signal that is transmitted by the ROADM node 100 and the ILA node 200, but the chromatic dispersion compensation is performed in advance by the DCM 150 onto an a signal that is to be added to the transmitted optical signal. Furthermore, the chromatic dispersion compensation is also performed by the DSP 440 at the destination optical transmitter/receiver 400. Hence, no optical insertion loss is produced in the transmitted optical signal at the DCM, and the amount of chromatic dispersion compensation by the DSP 440 can be reduced, which can suppress the power consumption of the DSP 440. As a result, a sufficient amount of chromatic dispersion compensation and a sufficient level of OSNR can be achieved at a transmission rate as high as, for example, 100 Gbit/s, and high-speed optical transmission can be realized while the power consumption is cut down.

### [d] Fourth Embodiment

According to the first to third embodiments, the optical transmission system in which an optical signal is transmitted only at a transmission rate as high as 100 Gbit/s has been discussed. However, when the optical transmission system comes into operation, transmission of an optical signal at the prevailing lower speed may also be desired. In other words, the optical transmission system should be configured to deal with not only an optical signal that can be received by the digital coherent reception system, but also an optical signal of, for example, 10 Gbit/s or 40 Gbit/s that is received by the direct detection system. Thus, according to the fourth embodiment, the optical transmission system that can deal with an optical signal of the prevailing transmission rate is explained.

According to the fourth embodiment, the structures of the optical transmission system and the optical transmitter/receiver 400 are the same as the structures of the second embodiment, and thus the explanation thereof is omitted. It should be noted, however, that the optical transmitter/receiver 400 may be configured to modulate transmission data by the conventional optical intensity modulating technology and demodulate a drop signal by the direct detection system. In other words, the optical transmitter/receiver 400 may be configured to receive and transmit optical signals of the prevailing transmission rate of 10 Gbit/s or 40 Gbit/s, for example.

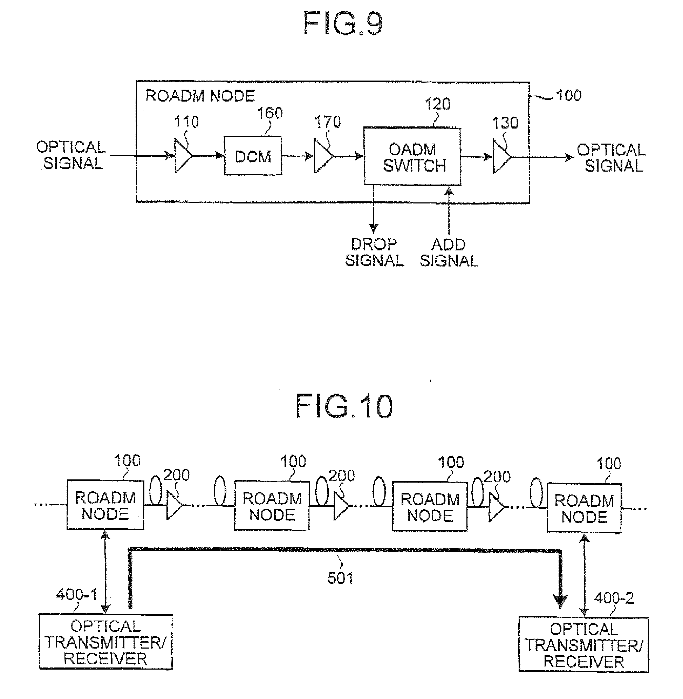

FIG. 9 is a block diagram for illustrating the structure of the ROADM node 100 according to the fourth embodiment. The components of FIG. 9 that are the same as those of FIG. 4 are given the same numerals, and the explanation thereof is omitted. In the structure of the ROADM node 100 illustrated in FIG. 9, the DCM 140 is removed from the ROMM node 100 of FIG. 4, and a DCM 160 and an amplifier 170 are added.

The DCM 160 compensates the chromatic dispersion of an optical signal amplified by the amplifier 110. More specifically, the DCM 160 includes, for example a fiber DCM, a fiber grating DCM, a higher-order mode DCM, or a DCF Raman, and compensates the chromatic dispersion of a transmitted optical signal when the optical signal passes through the DCM 160. The amplifier 170 amplifies the optical signal that is subjected to the chromatic dispersion compensation by the DCM 160.

According to the fourth embodiment, the chromatic dispersion compensation is performed on the transmitted optical signal by the DCM 160 of the ROADM node 100. However, the chromatic dispersion compensation is not performed by the DCM of the ILA node 20C, and thus optical insertion loss produced by the DCM can be minimized. The amount of chromatic dispersion compensation, at the DCM 160 depends on whether the transmitted optical signals include only signals that can be received by the digital coherent reception system. In other words, the amount of chromatic dispersion compensation performed by the DCM 160 depends on whether the optical signals that are transmitted in the optical transmission system include only optical signals of a rate as high as 100 Gbit/s that are subjected to the chromatic dispersion compensation by the DSP 440, or partially include signals of the prevailing rate such as 10 Gbit/s whose chromatic dispersion cannot be compensated by the DSP 440.

When the transmitted optical signals are all receivable by the digital coherent reception system, the amount of chromatic dispersion compensation performed by the DCM 160 becomes relatively small. In other words, the chromatic dispersion that cannot be covered by the compensation performed by the DSP 440 of the optical transmitter/receiver 400 should be shared and dealt with by all the DCMs 160 arranged on the transmission path. More specifically, as illustrated in FIG. 10, when a path 501 from the optical transmitter/receiver 400-1 to the optical transmitter/receiver 400-2 is assumed to be the longest path in the optical transmission system, an optical signal that is transmitted on the longest path 501 passes through three DCMs 160. For this reason, the amount of chromatic dispersion compensation performed by each DCM 160 is one third of the chromatic dispersion remaining after the compensation of the DSP 440 of the optical transmitter/receiver 400-2.

For example, when the chromatic dispersion that occurs in the longest path 501 is 30000 ps/nm and the amount of chromatic dispersion compensation performed by the DSP 440 can be adjusted in the range of -20000 ps/nm to +20000 ps/nm, the chromatic dispersion that is left of the compensation is 10000 ps/nm. Thus, if the amount of chromatic dispersion compensation, performed by each of the three DCMs 160 is on the order of -3500 ps/nm, the total amount of chromatic dispersion compensation performed by the three DCMs 160 and the DSP 440 reaches -30500 ps/nm, which is sufficient to compensate the chromatic dispersion in the longest path 501. If the required amount of chromatic dispersion compensation is -3500 ps/nm, ordinary fiber DCMs (i.e., dispersion cooperation fibers (DCFs)) may be adopted for the DCMs 160. If the chromatic dispersion can be compensated in the longest path 501, the chromatic dispersion in any path shorter than the longest path 501 can also be compensated.

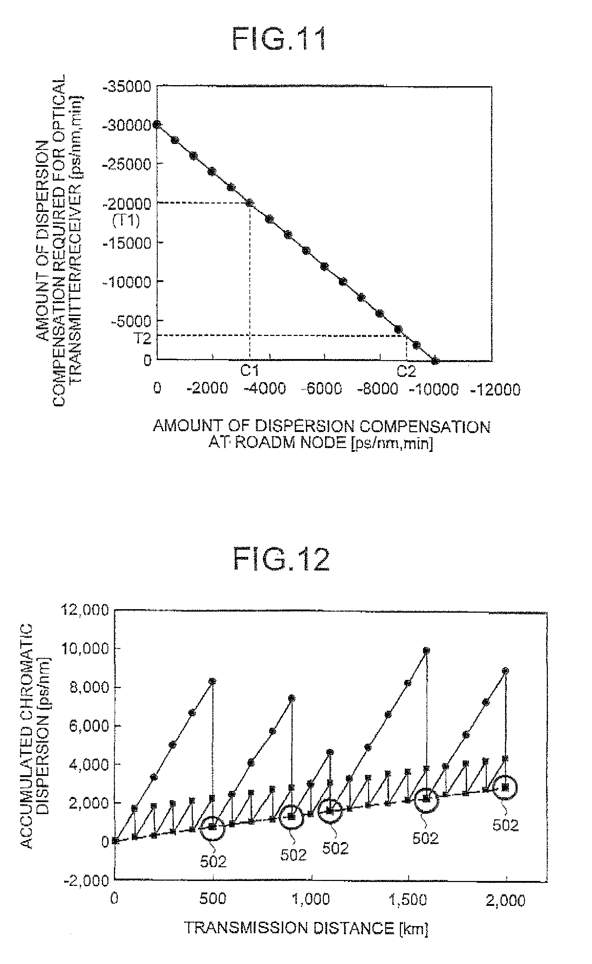

On the other hand, when the transmitted optical signets include signals that are not receivable by the digital coherent reception system, the amount of chromatic dispersion compensation performed by the DCM 160 is relatively large. In other words, when the amount of chromatic dispersion compensation by the optical transmitter/receiver 400 is small for a signal to which the digital coherent reception system cannot be applied, most of the chromatic dispersion that occurs in the transmission path needs to be shared and compensated by the DCMs 160 arranged on the transmission path. In particular, the relationship between the amount of chromatic dispersion compensation performed by the DCM 160 of a ROADM node 100 and the amount of chromatic dispersion compensation required for the optical transmitter/receiver 400 is indicated in FIG. 11.

As illustrated in FIG. 11, when the amount of chromatic dispersion compensation performed by the DCM 160 of the ROADM node 100 is as small as, for example, C1=-3500 ps/nm and the amount of chromatic dispersion compensation at the optical transmitter/receiver 400 is approximately T1=-20000 ps/nm, the chromatic dispersion that occurs in the transmission path can be compensated. In other words, when the chromatic dispersion compensation can be performed by the DSP 440 by use of the digital coherent reception system, -3500 ps/nm is a sufficient amount of chromatic dispersion compensation performed by the DCM 160. On the other hand, when chromatic dispersion compensation is not performed at the DSP 440 and the optical transmission system includes optical receivers whose amount of chromatic dispersion compensation is approximately T2=-3000 ps/nm, the amount of chromatic dispersion compensation greater than or equal to C2=-9000 ps/nm is required for the DCM 160. As described above, when optical signals of, for example, the prevailing 10 Gbit/s rate for which the chromatic dispersion compensation cannot be performed by the DSP 440 and are included in the transmission, the amount of chromatic dispersion compensation required for each DCM 160 increases. Thus, fiber grating DCMs or the like should be adopted for the DCMs 160.

Furthermore, when the transmitted optical signals include signals that cannot be received by the digital coherent reception system, the amount of chromatic dispersion compensation performed at the DCMs 160 or the RDADM nodes 100 may not be equally divided. In other words, according to the fourth embodiment, the DCMs are not arranged in the ILA nodes 200, but are concentrated in the ROADM nodes 100. For this reason, the amount of chromatic dispersion compensation performed at the DCM 160 of each ROADM node 100 is determined in accordance with the transmission distance from its adjacent ROADM node 100.

More specifically, when DCMs are arranged in all the nodes including the ROADM nodes 100 and the ILA nodes 200, the chromatic dispersion is compensated each time the optical signal is transmitted by the nodes, as represented by black squares in FIG. 12. On the other hand, according to the fourth embodiment where the DCMs 160 are concentrated in the ROADM nodes 100, the chromatic dispersion is accumulated when the optical signal is transmitted by the ILA nodes 200, as represented by black circles in FIG. 12. Then, when the optical signal is transmitted by the ROADM nodes 100 arranged at positions 502, the accumulated chromatic dispersion is compensated in a collective manner by the DCMs 160 of the ROADM nodes 100.

For this reason the amount of chromatic dispersion compensation at the DCM 160 increases as the transmission distance from the previous ROADM node 100 becomes longer. In the arrangement of the DCMs 160 only in the ROADM nodes 100, the amount of chromatic dispersion accumulated in a ROADM node 100 arranged at a position 502 is the same as the amount in a ROADM node 100 in the arrangement of the DCMs in all the nodes. Thus, deterioration in quality of the signal dropped at ROADM node 100 is not observed.

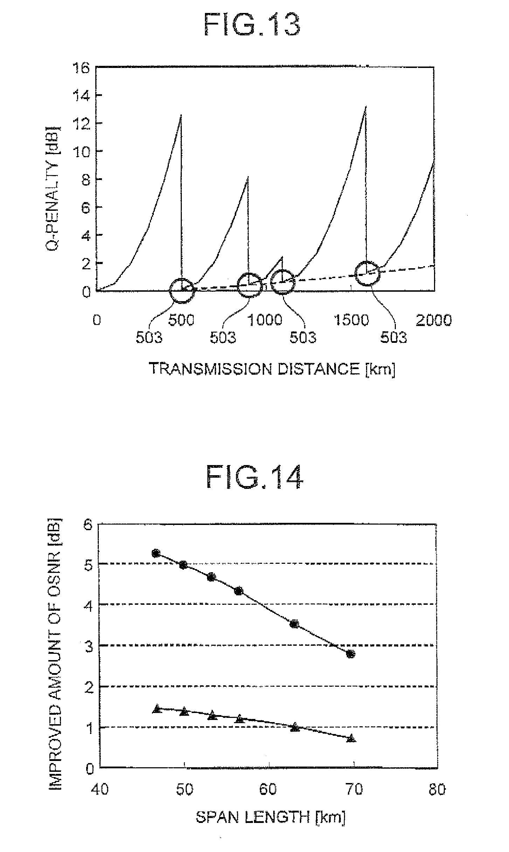

In other words, when DCMs are arranged in all the nodes, the Q-penalty that indicates the amount of signal degradation gradually increases as the transmission distance becomes greater, as illustrated in a dashed line in FIG. 13. On the other hand, when the DCMs 160 are arranged only in the ROADM nodes 100, the Q-penalty highly increases at positions other than positions 503 at which the ROADM nodes 100 are arranged, but it is reduced at the positions 503, as illustrated in a solid line in FIG. 13. Thus, the Q-penalty can be controlled under a reference value of, for example, 2 dB at the ROADM nodes 100 so that the transmission characteristics can be maintained at a certain standard level or higher.

The optical transmission system according to the present embodiment is now compared with the optical transmission system according to the second embodiment. Both optical transmission systems according to these embodiments do not include DCMs in the ILA nodes 200 but only in the ROADM nodes 100. In FIG. 14, examples of the effects of the concentrated arrangement of DCMs are indicated. In particular, FIG. 14 is a diagram for illustrating how much the OSNR in the optical transmission systems according to the second embodiment and the fourth embodiment is improved in comparison with the OSNR in the arrangement of DCMs in all nodes, in correspondence with the span length between nodes.

In FIG. 14, the black circles correspond to the optical transmission system according to the second embodiment, and the black triangles correspond to the optical transmission system according to the fourth embodiment. As illustrated in FIG. 14, in the optical transmission systems according to the second and the fourth embodiment, the OSNR can be improved in comparison with the optical transmission system in which DCMs are arranged in all nodes. Furthermore, according to the fourth embodiment, because the optical signal transmitted by the ROADM node 100 passes through the DCM 160 and optical insertion loss is produced in the optical signal that is being transmitted, the QSNR is not improved as much as in the system according to the second embodiment.

As discussed above, according to the fourth embodiment, chromatic dispersion compensation is not performed on an optical signal that is transmitted by the ILA node 200, but chromatic dispersion compensation is performed by the DCM 160 on the optical signal that is input to the ROADM node 100. When it is possible, the chromatic dispersion compensation is performed also by the DSP 440 of the optical transmitter/receiver 400. For this reason, when the digital coherent reception system can be applied, the amount of chromatic dispersion compensation required for the OSP 440 can be reduced, and the power consumption of the DSP 440 can be suppressed. Furthermore, even when the digital coherent reception system cannot be applied, the chromatic dispersion compensation can be by the DCMs 160 provided in the ROADM nodes 100 only, without using the DSPs 440.

In the explanation of the fourth embodiment, the optical signal that is transmitted by the ROADM nodes 100 always passes through the DCMs 160. However, switching of incorporation of the DCMs 160 may become desirable depending on whether the digital coherent reception system is applicable. For this reason, it is preferable that switching be provided so that whether the optical signal transmitted by the ROADM node 100 should pass through the DCMs 160 can be selected as needed.

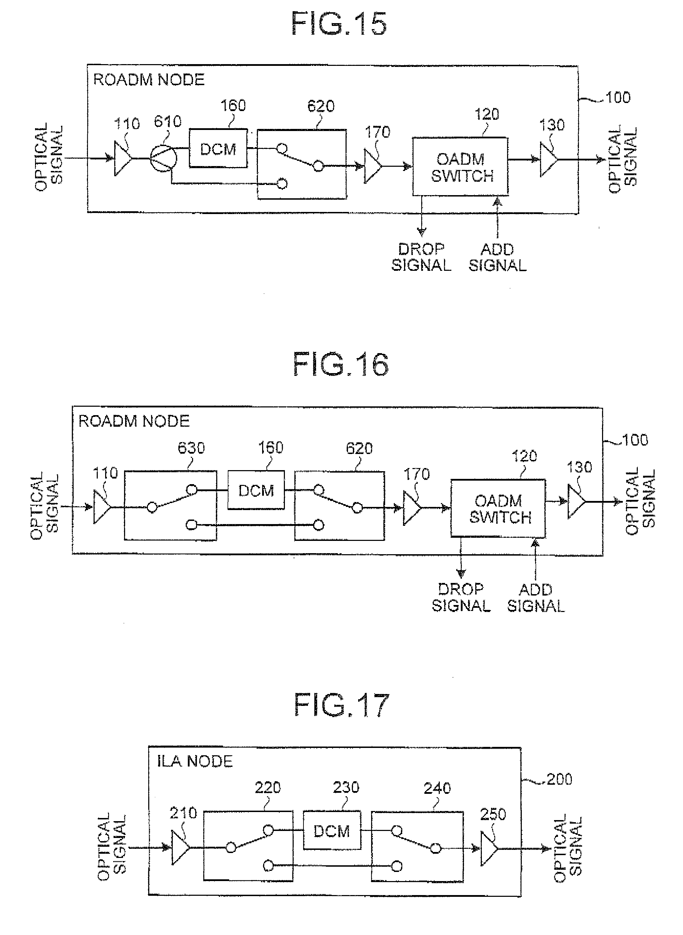

Thus, the ROADM node 100 may be configured as illustrated in FIG. 15. In particular, an optical coupler 610 is provided between the amplifier 110 and the DCM 160, and a switch 620 is provided between the DCM 160 and the amplifier 170. In this manner, whether an optical signal that passes through the DCM 160 or an optical signal that does not pass through the DCM 160 should be transmitted can be selected by switching the switch 620. For example, if the chromatic dispersion compensation performed by the optical transmitter/receiver 400 is not sufficient, switching can be made to the switch 620 to transmit an optical signal that passes through the DCM 160. If the DSP 440 sufficiently compensates the chromatic dispersion, switching can be made to the switch 620 to transmit an optical signal that does not pass through the DCM 160.

In the same manner, the optical coupler 610 may be replaced with a switch 630, as illustrated in FIG. 16, for example. In such a structure, the switch 620 and the switch 630 need to be simultaneously controlled, but there is no optical insertion loss at the optical coupler 610. In the same manner, the ILA node 200 may be configured to switch whether the DCM is incorporated. In other words, as illustrated in FIG. 17, the ILA node 200 includes an amplifier 210, a switch 220, a DCM 230, a switch 240, an amplifier 250, and whether the transmitted optical signal passes through the DCM 230 or not can be selected by controlling the switches 220 and 240.

In these structural examples, the node is controlled in such a manner as to allow the optical signal that is transmitted by the nodes to pass the DCMs when the DCM chromatic dispersion compensation is required, and not to allow the optical signal to pass through the DCMs when the DCM chromatic dispersion compensation is not required so that no optical insertion loss is produced at the DCMs.

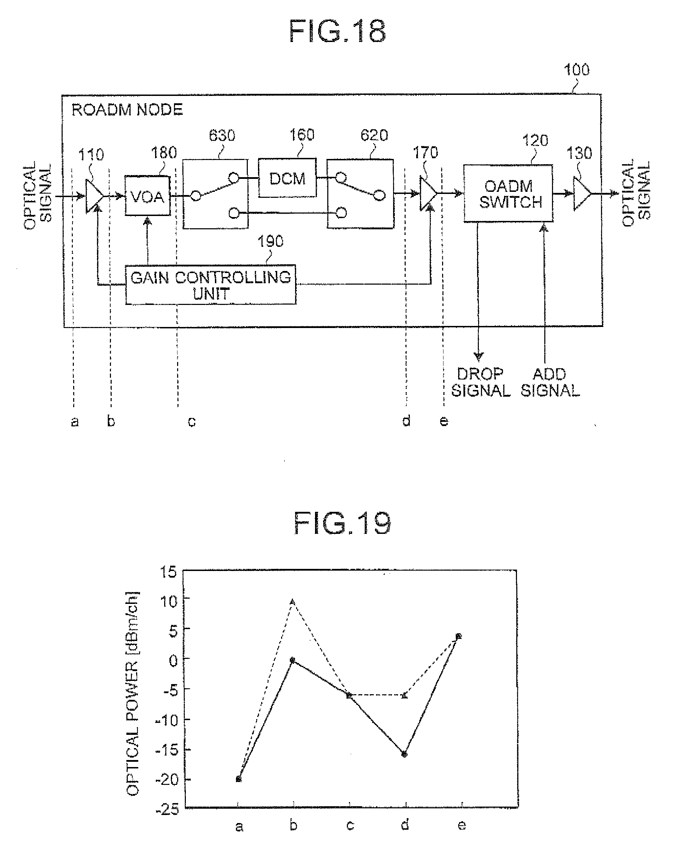

In addition, when the DCM passing is switchable, the OSNR of the optical signal can be further improved by suitably controlling the gains of the amplifiers 110 and 170 in accordance with the optical signal that is allowed or not allowed to pass through the DCMs. In this situation, the ROADM node 100 may be configured as illustrated in FIG. 18. In other words, a variable optical attenuator (VOA) 180 and a gain controlling unit 190 may be added to the RQADM node 100 of FIG. 16.

The VOA 180 attenuates the optical signal amplified by the amplifier 110 by a gain that is controlled by the gain controlling unit 190. In other words, the VOA 180 lowers the optical power at position c of the drawing from the optical power at position b so that the non-linear effect produced when the optical signal passes through the DCM 160 can be reduced.

The gain controlling unit 190 controls the gains of the amplifiers 110 and 170 and the VOA 180. More specifically, when whether the DCM 160 is incorporated can be selected by the switches 620 and 630, the gain controlling unit 190 controls the total gain of the amplifiers 110 and 170 so that it does not change before and after the switching. Then, when the optical signal does not pass through the DCM 160 by the switching of the switches 620 and 630, the gain controlling unit 190 brings the gain of the amplifier 110 as high as possible. At the same time, the gain controlling unit 190 lowers the gain of the amplifier 170 so that the total gain of the amplifiers 110 and 170 would remain unchanged. Further, the gain controlling unit 190 adjusts the gain of the VOA 180 so that the optical power of the optical signal output by the amplifier 170 would stay unchanged before and after the switching of the switches 620 and 630.

In FIG. 19, the optical power at positions a to e in FIG. 16 is indicated, and changes of the gain when the DCM 160 is incorporated or not incorporated are indicated. In FIG. 19, the optical signal that passes through the DCM 160 is indicated by the solid line, while the optical signal that does not pass through the DCM 160 is indicated by the dashed line.

As illustrated in FIG. 19, the optical power is reduced between the positions c and d when the optical signal passes through the DCM 160, while the optical power stays constant between the positions c and d when the optical signal does not pass through the DCM 160. In addition, when the optical signal passes through the DCM 160, the gains of the amplifiers 110 and 170 are substantially the same (e.g., 20 dB), and an amount of increase in the optical power between the positions a and b is substantially the same as an amount of increase in the optical power between the positions d and e. In contrast, when the optical signal does not pass through the DCM 160, the gain of the amplifier 110 becomes greater (e.g., 30 dB), and the gain of the amplifier 170 becomes smaller to compensate this amount (e.g., 10 dB)

In this manner, the gain controlling unit 90 controls the gains of the amplifiers 110 and 170 so that the gain of the input stage of the ROADM node 100 can be increased while the total gain stays unchanged. As a result, a tilt can be avoided, and the OSNR of the optical signal can be further improved when the signal does not pass through the DCM 160. The gain of the VOA 180 is adjusted by the gain controlling unit 190 in such a manner that the optical power at the position e is consistent before and after the switching of the switches 620 and 630.

According to an embodiment of the optical transmission system, the optical transmission equipment, and the chromatic dispersion compensation method disclosed in the present application, high-speed optical transmission can be realized while excessive power consumption can be avoided.

## Claims

1. An optical transmission system comprising:
an optical transmission equipment (100) that transmits an optical signal from a first adjacent node to a second adjacent node, the optical transmission equipment (100) comprising
an optical multiplexing and demultiplexing unit that demultiplexes the optical signal from the first adjacent node into an optical transmission signal that is to be transmitted to the second adjacent node and an optical demultiplexed signal addressed to an optical receiving device (300; 400), and that multiplexes the optical transmission signal with a signal from the optical receiving unit (300; 400) before transmission to the second adjacent node, and
a compensating unit (140) that partially compensates chromatic dispersion that occurs in the optical demultiplexed signal obtained by the optical multiplexing and demultiplexing unit, and
the optical receiving device (300; 400) that receives the optical signal from the optical transmission equipment (100), the optical receiving device (300; 400) comprising
a converting unit (430) that converts the optical demultiplexed signal the chromatic dispersion of which is partially compensated by the compensating unit (140) into an electric digital signal, and
a digital processing unit (440) that compensates, by digital signal processing, chromatic dispersion regaining in the electric digital signal that is obtained from conversion performed by the converting unit (430).

2. An optical transmission system comprising:
an optical transmission equipment (100) that transmits an optical signal from a first adjacent node to a second adjacent node, the optical transmission equipment comprising
a compensating unit (150) that partially compensates, in advance, chromatic dispersion that occurs in the optical signal when an optical signal sent out by an optical sending device (400) is carried to an optical receiving device (400), and
an optical multiplexing and demultiplexing unit (120) that demultiplexed an optical signal from the first adjacent node into an optical transmission signal that is to be transmitted to the second adjacent node and an optical demultiplexed signal addressed to an optical receiving device (400), and that multiplexes the optical transmission signal with the optical signal the chromatic dispersion of which is compensated by the compensating unit (150) and sends it to the second adjacent node,
the optical sending device (400) that sends the optical signal to the optical transmission equipment (100), and
the optical receiving device (400) that receives the optical signal transmitted by the optical transmission equipment (100), the optical receiving device comprising
a converting unit (430) that converts the optical signal, which is sent by the optical sending device (400) and transmitted by the optical transmission equipment (100) and the second adjacent node (200), to an electric digital signal, and
a digital processing unit (440) that compensates, by digital signal processing, chromatic dispersion remaining in the electric digital signal converted by the converting unit (430).

3. An optical transmission system comprising:
an optical transmission equipment (100) that transmits an optical signal from a first adjacent node to a second adjacent node, the optical transmission equipment comprising
a compensating unit (160) that partially compensates chromatic dispersion that occurs in the optical signal from the first adjacent node, and
an optical multiplexing and demultiplexing unit (120) that demultiplexes the optical signal the chromatic dispersion of which is partially compensated by the compensating unit (160) into an optical transmission signal that is to be transmitted to the second adjacent node (200) and an optical demultiplexed signal addressed to an optical receiving device (400), and that multiplexes the optical transmission signal with an optical signal from an optical transmitting device (400), and
the optical receiving device (400) that receives the optical signal from the optical transmission equipment (100), the optical receiving device comprising
a converting unit (430) that converts the optical demultiplexed signal obtained by the optical multiplexing and demultiplexing unit into an electric digital signal, and
a digital processing unit (440) that compensates, by digital signal processing, chromatic dispersion remaining in the electric digital signal that is obtained from conversion performed by the converting unit (430).

4. The optical transmission system according to claim 3, wherein the optical transmission equipment (100) further comprises
a switching unit (610, 620; 620, 630) that switches between a first output route and a second output route of the optical signal from the first adjacent node, the first output route leads to the optical multiplexing and demultiplexing unit (120) via the compensating unit (160) while the second output route leads to the optical multiplexing and demultiplexing unit (120) without passing through the compensating unit (160).

5. The optical transmission system according to claim 4, wherein the optical transmission equipment (100) further comprises
a first amplifying unit (110) that amplifies the optical signal in a stage preceding the routes switched by the switching unit (620, 630),
a second amplifying unit (170) that amplifies the optical signal in a stage subsequent to the routes switched by the switching unit (620, 630), and
a gain controlling unit (190) that keeps a total value of gains of the first amplifying unit (110) and the second amplifying unit (170) constant, and changes a ratio of the gains before and after the routes are switched by the switching unit (620, 630).

6. The optical transmission system according to any one of claims 1 to 3, wherein the compensating unit (140; 150; 160; 230) compensates an amount of chromatic dispersion that is not compensated by the digital processing unit (440), out of an amount of chromatic dispersion that occurs in the optical signal in accordance with a transmission distance up to a point at which the optical receiving device (300; 400) receives the optical signal.

7. The optical transmission system according to claim 6, wherein the compensating unit (140; 150; 160; 230) compensates an amount of chromatic dispersion that is obtained by dividing the amount of chromatic dispersion that is not compensated by the digital processing unit (440), equally by this number of optical transmission equipments (100) arranged in a transmission path of the optical signal.

8. The optical transmission system according to claim 6, wherein the compensating unit (140; 150; 160; 230) compensates an amount of chromatic dispersion in accordance with a distance to an adjacent optical transmission equipment (100), out of the amount of chromatic dispersion that is not compensated by the digital processing unit (440).

9. An optical transmission equipment (100), comprising:
a routing unit through which an optical signal is transmitted;
an optical multiplexing and demultiplexing unit (120) through which an optical demultiplexed signal obtained from demultiplexing of the optical signal that is transmitted through the routing unit or an optical multiplexed signal that is multiplexed into the optical signal passes; and
a compensating unit (140; 150) that performs chromatic dispersion compensation onto the optical demultiplexed signal or the optical multiplexed signal that passes through the optical multiplexing and demultiplexing unit (120).

10. A chromatic dispersion compensation method, comprising:
receiving an optical signal;
demultiplexing the optical signal received in the receiving into an optical transmission signal that is to be transmitted to an adjacent node and an optical demultiplexed signal addressed to an optical receiving device (300; 400);
partially compensating (S102; S204) chromatic dispersion that occurs in the optical demultiplexed signal obtained in the demultiplexing;
converting (S206) the optical demultiplexed signal the chromatic dispersion of which has been partially compensated in the compensating into an electric digital signal; and
compensating (S103; S207) chromatic dispersion remaining in the electric digital signal obtained from conversion in the converting, by digital signal processing.

11. A chromatic dispersion compensation method, comprising:
receiving an optical signal from an adjacent node;
partially compensating (S301), in advance, chromatic dispersion that occurs in the optical signal when the optical signal sent out by an optical sending device (400) is carried to a destination;
multiplexing (S201) the optical signal received in the receiving with the optical signal the chromatic dispersion of which has been compensated in the compensating;
demultiplexing (S203) the optical signal multiplexed in the multiplexing into an optical transmission signal that is to be transmitted to another adjacent node and an optical demultiplexed signal that is addressed to an optical receiving device (400);
converting (S206) the optical demultiplexed signal obtained in the demultiplexing into an electric digital signal; and
compensating (S207) chromatic dispersion remaining in the electric digital signal obtained from conversion in the converting, by digital signal processing.
